# EUROPEAN PATENT APPLICATION

(11) **EP 1 582 335 A1**
(43) Date of publication of application: **05.10.2005**
(21) Application number: 03724790.5
(22) Date of filing: 21.04.2003
(51) Int. Cl.: B30B 11/22, B30B 11/28, A23P 1/12

(54) **EXTRUSION MOLDING CAVITY AND MOLDING MACHINE FOR LOOSE FABRICABLE BIOMATERIAL**

(30) Priority: 29.11.2002 CN 02153380
(71) Applicant: Che, Zhanbin, Beijing 100080 (CN)
(72) Inventor: Che, Zhanbin, Beijing 100080 (CN)
(74) Representative: Hayes, Adrian Chetwynd
(86) International application number: PCT/CN2003/000289
(87) International publication number: WO 2004/050340

(57) **Abstract**

The present invention is mainly related to an extrusion molding cavity and a molding machine for loose fabricable biomaterial. The molding cavity comprises molding section and an expanding section in sequence from the inlet side to outlet side of it. A guiding contracted section is located at the inlet side of the cavity and at side of the molding section. The inlet area of the guiding contracted section is larger than the molding section's. The molding unit comprises at least a molding die and a extrusion head driven by power, a sphenoid extrusion cavity is located between the extrusion head and the extrusion side of the molding die, a feeding throat is formed at the expanding side of the sphenoid extrusion cavity, the above molding cavity is applied to the molding die, in the action of the relative movement of the extrusion head and the extrusion side of the molding die, the granule material is ground and stretched into a sheet from the expanding portion of the sphenoid extrusion cavity to the low portion of the guiding contracted section, from the deep portion of the guiding contracted section into the molding section of the molding cavity to molding.

## Description

### Field of the Invention

The present invention relates to a molding apparatus for a molding material made of biological matter in a loose condition, the apparatus capable of shaping biological matter-based material, without relying upon any chemical adhesive, into combustible material or construction material that will not deform after it becomes wet.

### Background of the Invention

Shapeable material made of biological matter referred to in the present invention , means the type of raw material that is comprised of straw of crop or herbage or solid waste produced by wood processing, to name a few, wherein the raw materials are processed into a loose condition. This type of raw material that is made of a biological matter-based material is comprised of waste produced by natural plants and is characterized by low cost and regenerability as well as abundant availability.

Burning is the major method of utilizing biological matter-based material. More specifically, the biological matter-based material is considered to be a desirable alternative to inflammable mineral because its emission does not contain any toxic gas such as sulfur dioxide and nitrogen oxides. However, the un-molded biological matter-based material is in a loose condition: it is bulky for transportation and storage and so high in its usage cost that the biological matter-based material must be processed into a molded form to substantially reduce its cubage [sic: volume] and to remarkably improve its burning efficiency per unit cubage. Only then can the material have useful value. On the other hand, as burning material is produced by biological matter, it is very important to keep the original burning emission characteristics of the biological matter; that is to say, any type of chemical bonding and dipping material cannot be added to the molded burning material produced with biological matter, which is considered to be very difficult for molding processing of biological matter-based material in a loose condition.

For that reason, scientists from all over the world have drawn a conclusion that there is a mechanism by which biological matter-based material solidifies and can be molded by a large body of research focused on the characteristics of biological matter-based material. Today, the generally-accepted molding mechanism is that lignin in a plant cell is able to intenerate and liquefy at a temperature of 200 to 300 degrees centigrade.
The molding of biological matter-based material can be achieved by the steps comprising application of a specific pressure on lignin, tight - bonding of cellulose across adjacent granules in a plant cell and cooling thereof to cause immediate solidification during molding in the absence of adhesives.

According to the above mechanism for molding biological matter-based material, conditions of molding biological matter are determined by lignin that is characterized by inteneration and liquefaction. First, there are specific requirements for biological matter-based material and category as well as moisture content for granularity. It is generally believed that the granularity of biological matter-based material is 10mm or less while its moisture content is 10% or less. On account of moisture content of biological matter-based material at 20% to 40%, it is required that the material be dried before molding. Currently, the most commonly-used process for solidifying and molding biological matter, based on the above-mentioned requirements for the raw material for molding, has the steps comprising: biological matter-based material→crushing →drying →extruding and molding →packaging.

It is generally believed that, among all methods commonly used for molding, extrusion molding is the core of solidifying technology. In the extrusion molding process, pressure and temperature are the two most important factors. If material fails to reach a given temperature, lignin cannot be intenerated and melted; then, adhesion and bonding will not be achieved between granules; further, sticking and bonding will not occur between granules unless a given pressure is applied thereto.

Numerous searches in patent documents have proven that the solidification and molding of biological matter are most commonly achieved by propelling a screw and compressing the biological matter, continuously extruding the material into a mold while heating the mold to a high temperature. Normally, a set heating temperature is selected so as to satisfy the requirements of lignin, which are inteneration and liquefaction temperature (specifically 240 to 260 degrees centigrade), and the cooling solidification characteristic. Nevertheless, during the process of heating the material at a high temperature in a mold, if the moisture content of the material is high, the moisture may not be released successfully, causing generation of cracks on the surface of the product after molding and explosion of the product in an extreme case. Therefore, when it is required to crush biological matter-based material, according to the processing art, the material must be dried in order to release moisture. By doing so, the material is given the ability to be extruded and molded. During the extrusion process, the high temperature generated by an electronic heating apparatus causes substances contained in the biological matter-based material such as lignin etc. to overflow, thereby inducing the adhering and bonding effect.

Long-term usage has proven that there are various unconquered drawbacks in the processing of conventional technology, including substantial energy consumption during the manufacturing process: the requirement for pre-drying the material demands a substantial amount of energy consumption. In addition, by drying of the material to a moisture content of less than 10% at the point of extrusion operation, substantially increases the frictional forces during extrusion, resulting in an increase in resistance during extrusion molding and an increase in energy consumption per unit for the resulting product. Moreover, during the solidification and molding process, a substantial amount of energy is consumed for heating during processing.

A large number of operations have proven that it is the high energy consumption required for production of biological matter-based material during the molding process that increases the manufacturing cost; this is the reason why the molding of biological matter-based material could not have been widely spread throughout the world.

According to traditional extrusion theory, during the extrusion process, the more the material is compressed inside an extrusion cavity, the finer the molded final product becomes, and the smoother the surface thereof becomes. Reflecting traditional extrusion theory, many mold cavities of existing extrusion molds appear to have a contracted shape in which an outlet has a smaller diameter than that of inlet to compress the material during molding, thereby improving its packing performance. Nonetheless, during practical application of the process, the positive pressure fails to be conducted into a molding cavity during the extrusion process because the distance the loose biological material can conduct force is relatively short, only 3-5mm. Thus, the molding cavity in a contracted shape actually cannot be compressed based on traditional theory, which will contribute little to the packing performance of the final molded product. On the other hand, a molding cavity of this type having a contracted shape requires a larger extrusion force to extrude the material because the diameter of the outlet for the material is smaller than that of the inlet. As a result, energy consumption increases during the extrusion process, thereby increasing manufacturing costs of molded articles made of biological matter-based material.

Until now, most molding processes have been achieved by using the screw type or hydraulic pressure extrusion method. This method is characterized by the application of positive pressure to the material such that material in a loose condition is continuously compressed and molded. Meanwhile, some scholars in China have been carrying out research focused on a form of deformation and bonding of granules in the compression molding, resulting in a micro-bonding model [to understand] granules during compression molding of the biological matter-based material. They believe that during the compression molding process, granules existing in this material continue to enter into interspaces between granules, as the process begins, by applying a relatively low pressure thereto, such that interpositions between granules are renewed continuously. When pressure is increased again after all available large interspaces between granules are occupied by granules that are able to enter their surrounding interspaces can only be filled by the deformation of the granules themselves. By that time, granules are extended within a plane that is vertical to the maximum primary stress. When granules are extended into a condition in which two adjacent granules interact with each other, pressure is increased once again such that granules can be bonded together.

The present inventor conducted substantial research with a focus on characteristics of force conduction and found that this type of biological matter-based material in a loose condition conducts force poorly. Therefore, when all available large interspaces are occupied by granules capable of entering the interspaces thereof, even at a higher pressure applied again thereto, it is still very difficult for granules to be fully extended because the amount of deformation of the granules is relatively small. It is also very difficult for granules in the molded articles to reach the ideal embedded condition. Accordingly, the bonding strength of the product obtained after compression molding is relatively low. This is the core technological issue. Unfortunately, it is ignored in existing molding processes.

The previously described screw extrusion type molding machine for biological matter is characterized by a complex structure and low productivity. Particularly under the condition in which the moisture content of the material is less than 10%, the screw is at a high temperature with dry friction, with substantial wear of the molding machine, providing an average life of 60 to 80 hours.

To briefly state, a few relatively important problems must be solved in order to achieve effective and pollution-free use of biological matter-based material.

First, the molded product must have a given bonding strength and a moisture-resistant characteristic. Second, the energy consumption must be reduced to the maximum level to lower manufacturing costs. Third, chemical additives contained in molded product must be reduced to a minimum so as to lower the environmental pollution generated by the molded product during manufacturing and usage of the molded product.

Another application of the biological matter-based material is the use of crushed biological matter-based material to produce feed cakes by extrusion and molding to feed animals. The commonly used extrusion molding machine for feed includes a canister-shaped mold, in which a shaping mold cavity is mounted on a side wall of the mold, one or a plurality of extruding heads are mounted inside a canister-shaped cavity and extruder heads are supported by separate axes of rotation. This machine is operated in the following mechanism: a canister-shaped molding cavity is operated by a drive force; the extruder heads are rotated in a direction opposite to the mold via friction generated between the surfaces to be extruded by operating the shaping mold; the material is intruded into a molding cavity which is on top of the shaping mold and eventually is molded. It is not so hard to understand from the molding mechanism that the linear velocity given to the extruding head remains the same as the linear velocity given to the surface of the shaping mold, and completely the same as the linear velocity given to both up and down motions of the surfaces inside an extrusion cavity between the extruding head and the shaping mold. This mode of motion is used to mold the biological matter-based feed characterized by the shape of cakes having a relatively lower structural density, relative softness and looseness and poorer waterproofing characteristics, which makes the material more suitable for the use as feed. In contrast, the use of cake-shaped biological matter-based material manufactured by this molding method can easily be crushed after the material is adversely affected by humidity substantially reducing the bonding strength. For example, burning material made of biological matter using the said method turns into powder after it is put into water for several minutes; therefore, it cannot be used as burning material.

### Summary of the Invention

The object of the present invention is to provide an extrusion molding cavity for molding shapeable material made of biological matter in a loose condition, which dramatically reduces energy consumption consumed by the material passing through the molding cavity as well as manufacturing costs.

Another object of the present invention is to provide a molding machine for molding a burning material made of a biological matter in a loose condition, which allows the molded product to have the required bonding strength and moisture-resistant quality while greatly reducing energy consumption required for the manufacturing process, thereby reducing manufacturing costs.

Yet another object of the present invention is to provide a molding machine for molding a burning material made of the biological matter in a loose condition, which greatly reduces chemical additives contained in the molded product so as to lower environmental pollution caused by molding products during manufacturing and by the use of the processed [material].

The technical solution of the present invention described herein is an extrusion molding cavity for molding a shapeable material made of a biological matter in a loose condition wherein the molding cavity is located on the surface of a shaping mold. A material inlet of the mold cavity is arranged opposite to an extruding head. A molding segment and an expanding segment is provided along the molding cavity from the inlet end to the outlet end respectively wherein the diameter of the outlet of the expanding segment being larger than the diameter of the molding segment. The inlet end of the mold cavity is mounted on a guided contracting segment. The inlet area of the guided contracting segment is larger than the inlet area of the molding segment and the guided contracting segment is mounted on oneside of a shaping mold cavity wherein material is intruded into the shallow end of the guided contracting segment via one side of the shaping mold cavity after the material is compressed inside the guided contracting segment and enters the molding segment from the deep end and is eventually molded.

The expanding segment is a pole-like expanding segment or an expanding segment which expands gradually.

The expanding segment which expands gradually is a cone-shaped expanding segment or an arc expanding segment which expands gradually.

The cone-shaped expanding segment may have single or multiple segments; the angle of expansion of one or more cone-shaped segments increasing gradually from the inlet end toward the outlet end.

The cross section of the expanding segment might be a circle, a diamond, a hexagon or an irregular shape.

The height of the large end of the guided contracting segment is shorter than the force conduction distance of the material, typically no greater than 10 mm.

A molding machine for molding a shapeable material made of a biological matter in a loose condition includes at least one extruding head driven by power and one shaping mold. The extrusion surface between the extruding head and the shaping mold has at least one wedge-shape extrusion cavity, wherein the large end of the wedge-shaped extrusion cavity is provided to a material inlet. The shaping mold cavity of the shaping mold comprises at least an expanding segment and a molding segment provided along the axis from an inlet end to the outlet end thereof wherein the diameter of the outlet end of the expanding segment is at least larger than the diameter of the molding segment and the inlet of the mold cavity being mounted with a guided contracting segment. The inlet area of the guided contracting segment is larger than the inlet area of the molding segment and the guided contracting segment is mounted on one side of a shaping mold cavity. Under the influence of the relative motion of the extrusion surface between an extruding head and a shaping mold, a grainy material is ground, rubbed, pulled, extended into a sheet form and intruded into the shallow end of the guided contracting segment from the large end of the wedge-shaped extrusion mold cavity. After the material is compressed inside the guided contracting segment, it enters into the molding segment of the mold cavity from the deep end of the guided contracting segment and is eventually molded.

The extruding head may comprise a roller, the shaping mold may be in a canister-shape, and the shaping mold cavity may be mounted on the side wall of the canister-shaped mold. The wedge extrusion mold cavity is formed between the rolling surface of the extruding head and the extrusion surface of the shaping mold.

The extruding head constructed with a roller may be cylindrically shaped and the shaping mold may correspond to the cylindrical shape.

The extruding head constructed with a roller may be conically shaped and the shaping mold may correspond to the conical shape.

The extruding head may be constructed with a rotor. The shaping mold may be flat.
The shaping mold cavity may be located on the flat mold. The wedge-shaped extrusion cavity may be formed on the extrusion surface between the extruding head and the shaping mold.

The shaping mold may be disk shaped. The axis of the extruding head and the axis of the shaping mold may be parallel to each other or may overlap. The end surface of the extruding head constitutes the extrusion surface of the extruding head.

The shaping mold may be molded into a plank-shape with reciprocal motion or uni directional motion characteristic. The extruding head may be cylindrically shaped and the surface of the cylinder may constitute the extrusion surface of the extruding head.

The shaping mold may be molded into a circular plate shape that can be rotated about the axis thereof. Its circular panel is mounted on the extruding head. The extruding head is formed in a cylindrical shape wherein the outer surface of the cylinder constitutes the extrusion surface of the extruding head. The axis of the extruding head and the axis of the shaping mold intersect each other.

The expanding segment may be a pole-shaped expanding segment or an expanding segment which expands gradually.

The expanding segment which expands gradually may be a cone- shaped expanding segment or an arc- shaped expanding segment which expands gradually.

The cone-shaped expanding segment may have one or more segments. The gradually expanding angle of one or more cone-shaped expanding segments increases from the inlet end toward the outlet end.

The extruding head and the shaping mold are both rotated by a driving force, the driving force [being provided by] an electric device and a deceleration apparatus connected to the electric device. The relative motions occurring in the extrusion mold turning in a direction opposite to the extruding head includes the extruding head's rotation about the rotation center and the shaping mold's rotation about a rotational axis thereof.

The extruding head and the shaping mold are rotated separately by a drive force. Fan-outs secured to at least two of the decelerated apparatuses are connected to the extruding head and the shaping mold separately. The differential speed relative motions coupled to the extruding head and the shaping mold are generated on the extrusion surface.

The driving force comprises an electric device which is connected to at least two of the decelerated apparatuses having at least fan-outs which are connected to the extruding head and the shaping mold separately. Differential speed relative motion coupled to the extruding head and the shaping mold are generated on the extrusion surface.

The relative motion between the extruding head and the shaping mold may be differential speed rotations in the same direction.

The relative motion between the extruding head and the shaping mold may be rotations in the opposite direction.

The most preferable linear velocity of the extruding head is greater than the linear velocity of the extrusion surface of the shaping mold.

The extruding head may be a single segment wherein a wedge-shaped extrusion cavity is formed on the extrusion surface between the extruding head and the shaping mold.

The molding machine comprises two or more extruding heads. The two or more extruding heads are rotated at the same speed in the same direction. Two or more wedge-shaped extrusion cavities may be formed at corresponding points on the extrusion surface between the extruding head and the shaping mold.

The two or more extruding heads may be driven by the same power [source].

The relative motions generated by the extrusion mold which is arranged opposite to the extruding head comprise the extruding head's rotation about the rotation axis thereof and the extruding head's revolution around the shaping mold's rotational center coupled to the shaping mold.

The shaping mold cavity on a shaping mold may be provided at an angle with respect to the extrusion surface of the shaping mold.

The present invention is related to extrusion molding under normal temperature, that is, molding is not conducted by heating at a high temperature. Therefore, the present invention is able to substantially save energy consumption required for high temperature heating. Most importantly, the present invention allows the biological matter-based material at the time of molding only using the action between cutting-induced friction interactions among granules and the pressure created under the extruding condition of the biological matter. Elements in limited position are hence extended and the original lignin is extruded, allowing the use of bonding strength to mold adjacent fibers. Accordingly, the use of the molded product of the present invention ensures higher plasticity and higher moisture resistance. A large number of experiments conducted by the present inventor have proven that the molded product produced by the molding method of the present invention maintains the shape the product had at the time of molding, even when the molded product was dipped in water for more than 40 hours. Further, the advantages inherent to the molded product cannot be lost after the product is dried. However, the product produced by the molding method of conventional technology crushes after it is dipped in water for more than 10 minutes.

When a molding machine of the present invention is used for extruding and molding, material is first bored by a cutting force applied to the extrusion cavity before the material is fed into the shaping mold cavity. Further, in the presence of a cutting force, the grainy material inside the extrusion cavity is first ground, rubbed and extended into a sheet form. As the cubage of the extrusion cavity is gradually reduced, the sheet-shaped material is fed into the shaping mold appearing like a cascade. As the extrusion process progresses, not only is the layer-to-layer density increased continuously but also, at the same time, part of the granules, after deformation, enter into the interspaces between sheet-shaped granules while a positive extrusion force is applied to the sheet-shaped granules, thereby creating the condition in which granules are interlocked with each other vertically. The special structural model that characterizes the molded articles of the present invention can provide a mechanical strength that is better than that of conventional molded articles.

According to the shaping mold cavity of the present invention comprising a molding segment and an expanding segment, the thickness and intensity thereof deteriorate by a small amount and the length of the molding segment of the shaping mold cavity is reduced. The relatively small force conduction distance, which is an advantage of the biological matter-based material in a loose condition, can be used for shaping the mold cavity. In order to ensure the quality of molding, the molding segment reduces the length and the time the material is exposed to friction generated by extrusion while it remains in the mold cavity. Resistance from the material during extrusion can be substantially reduced. Only a small positive pressure is required for extruding and molding the material. Hence, energy consumption by the material passing through a shaping mold cavity is substantially reduced, further reducing processing costs of the molded articles made of the biological matter-based material of the present invention. Experiments have proven that energy consumption required for manufacturing molded articles utilizing the shaping mold cavity of the present invention can be reduced 30% when compared to [energy consumption using] a conventional shaping mold cavity having a contracted shape.

More concretely, the inlet end of the mold cavity of the present invention is mounted on a guided contracting segment; the inlet area thereof being greater than the inlet area of a molding segment. When material is being molded, it is first fed into the guided contracting segment to be compressed therein. As the material passes through the molding segment and is eventually molded, the length of the molding segment is further reduced and can be shaped immediately because the material is first compressed before it is fed into the molding segment. In this way, it not only improves the quality of the molded articles but also reduces energy consumption during extrusion due to the existence of the expanding segment.

A large number of experiments have proven that molding biological matter-based material of the present invention provides many advantageous effects. These advantageous effects include: 1) a greater bonding strength of the molded material without requiring any chemical adhesive while protecting rooms and environment from pollution caused during manufacturing and processing; 2) a substantial reduction in moisture content of the molded material, ensuring higher quality with water-proof characteristics for the molded material qualifying the molded material for use and storage in a humid environment; and 3) a substantial reduction in manufacturing costs, promoting the use of biological matter-based material to one's advantage.

### Brief description of the Drawings

FIG. 1 is a schematic diagram showing the structure of the shaping mold cavity of the present invention.
FIG. 2 is a schematic diagram showing the structure of another shaping mold cavity of the present invention.
FIG. 3 is a schematic diagram showing the structure of another shaping mold cavity of the present invention.
FIG. 4 is a schematic diagram showing the structure of another shaping mold cavity of the present invention.
FIG.5 is a cross-sectional view of the structure of the shaping mold cavity of the present invention.
FIG. 6 is a cross-sectional view of the structure of another shaping mold cavity of the present invention.
FIG. 7 is a cross-sectional view of the structure of another shaping mold cavity of the present invention.
FIG. 8 is a schematic diagram showing the mechanism and the structure of the molding machine according to a second embodiment of the present invention.
FIG. 9 is a schematic diagram showing the mechanism and the structure of the molding machine according to a third embodiment of the present invention.
FIG. 10 is a schematic diagram showing the mechanism and the structure of the molding machine according to a fourth embodiment of the present invention.
FIG. 11 is a schematic diagram showing the mechanism and the structure of the molding machine according to a fifth embodiment of the present invention.
FIG. 12 is a schematic diagram showing the mechanism and the structure of the molding machine according to a fifth embodiment of the present invention.
FIG. 13 is a schematic diagram showing the mechanism and the structure of the molding machine according to a sixth embodiment of the present invention.
FIG. 14 is a schematic diagram showing the mechanism and the structure of the molding machine according to a seventh embodiment of the present invention.
FIG. 15 is a schematic diagram showing the molding mechanism and the structure of the molding machine of the present invention.
FIG. 16 is a schematic diagram showing the structure of the molding machine of the present invention.
FIG. 17 is a schematic diagram showing the mechanism and the structure of the molding machine equivalent to an eighth embodiment of the present invention.
FIG. 18 is a schematic diagram showing the mechanism and the structure of the molding machine equivalent to an eighth embodiment of the present invention.

### Detailed Description of the Preferred Embodiments

### First Embodiment

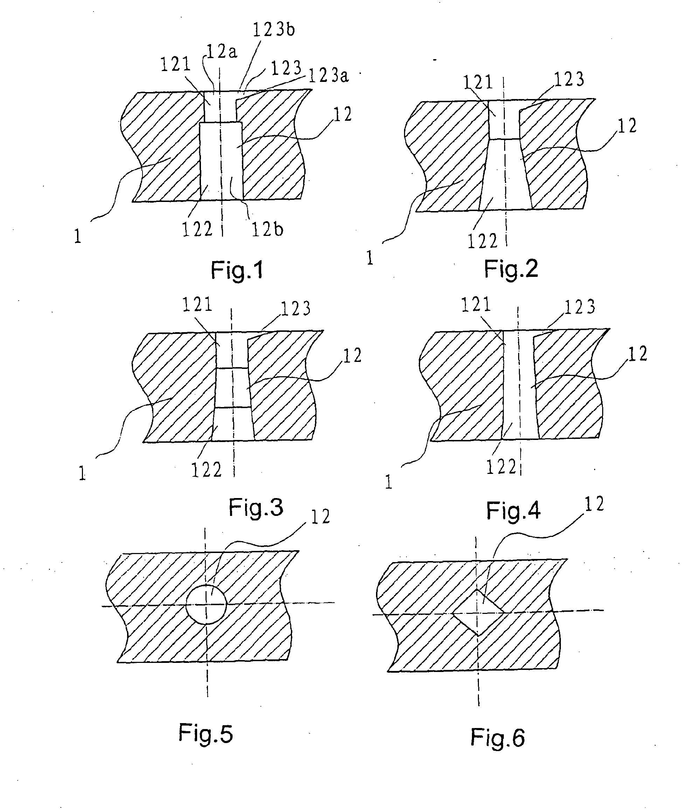

FIG. 1 illustrates the extrusion shaping mold cavity 12 for molding a shapeable material made of a biological matter in a loose condition. This mold cavity 12 is located on the surface of the shaping mold 1 and material inlet end 12a is arranged opposite to the extruding head. Mold cavity 12, which expands from the inlet end 12a toward the outlet end 12b, comprises a molding segment 121 and an expanding segment 122. The diameter of an outlet secured to expanding segment 122 herein is larger than the diameter of the molding segment 121. The inlet end 12a of mold cavity 12 is mounted on the guided contracting segment 123 whose inlet area is larger than inlet area of molding segment 121. The guided contracting segment 123 is mounted on one side of the shaping mold cavity. Material is, fed into the shallow end 123a secured onto guided contracting segment 123 from the side. After it is compressed inside the guided contracting segment 123, it enters into molding segment 121 of mold cavity 12 from its deep end 123b and is eventually molded.

As shown in the structure provided to the extrusion shaping mold cavity for molding a shapeable material made of a biological matter in a loose condition of the present invention, material is molded through the shaping mold cavity 12 in such a manner that it is first molded through molding segment 121 and then is extruded through expanding segment 122. The material inside expanding segment 122 is exposed to much smaller friction or it is molded free of friction because the diameter of the outlet end of the said expanding segment 122 is larger than the diameter of molding segment 121. In this case, the thickness and bonding strength provided to shaping mold 1 does not diminish. As a result, the length of molding segment 121 of shaping mold cavity 12 decreases. Thus, the relatively small force conduction distance, which is an advantage of the biological matter-based material in a loose condition, can be used for the shaping mold cavity. In order to ensure the quality of molding, the length of the molding segment and the time material is exposed to friction during extrusion is reduced as long as the material remains in the mold cavity. Only a small positive pressure is required for extruding and molding the material. Hence, the energy consumption by the material passing through the shaping mold cavity12 is substantially reduced, further reducing processing costs of the molded articles made of the biological matter-based material.

Further, material in this embodiment enters into molding segment 121 secured to shaping mold cavity 12 through guided contracting segment 123. It is easy to understand that material can be fed into guide contracting segment 123 easily because guided contracting segment 123 has a much larger inlet area [than molding segment 121]. The height of a large end secured to the said guided contracting segment 123 is smaller than the conduction distance of force of material, generally no greater than 10 mm. The material being compressed and intruded inside guided contracting segment 123 is fed into molding segment 121 and molded therein. The extrusion efficiency and the quality of the extruded articles molded therein are thus improved.

As shown in FIG. 1, in this embodiment, the expanding segment may be a pole-shaped expanding segment, and the molding segment 121 defined by inlet end 12a and outlet end 12b may have a diameter smaller than that of the expanding segment 122 secured onto the ladder-shaped mold cavity 12.

As shown in FIG. 5 to FIG. 7, in this embodiment, shaping mold cavity 12 may produce articles in a variety of cross-sectional shapes in order to meet requirements of the market. For example, if the cross-section of the shaping mold cavity 12 is in a circular shape, the material may be molded into a circular stick. If the cross-section has a diamond shape, the material can be molded through the cavity with the diamond cross-section to produce a cylindrical article with a diamond cross section. Alternately, if the cross section is in a hexagonal shape, the material can be molded through the cavity with a hexagonal cross-section to produce a cylindrical article with a hexagonal cross section. The said cross-sections can be modified to produce more varieties such as H-shape, rectangle and irregular shapes, to name just a few.

As shown in FIG. 2 to FIG. 4, in this embodiment, the expanding segment might be an expanding segment which expands gradually. The expanding segment with gradually expanding [cross-section] may be cone-shaped or arc-shaped in an expanding manner. The cone-shaped and expanding segment with a gradually expanding diameter may be constructed with one (as shown in FIG. 2) or more segments (as shown in FIG. 3). In one or more cone-shaped and expanding segments in a gradually-expanded configuration, the angle gradually widens from the inlet end 12a toward the outlet end 12b. With the shaping mold cavity 12 in the gradually expanding configuration, the extrusion resistance diminishes during extrusion. Therefore, only a smaller positive pressure is required for extruding material to be molded. Accordingly, the energy consumption and the cost of molding are substantially reduced.

### Second Embodiment

As shown in FIG. 1, FIG. 8 and FIG. 15, the molding machine for molding a burning material made of a biological matter in a loose condition comprises an extruding head 2 driven by power and a shaping mold 1. A wedge-shaped extrusion cavity 3 is formed on the extrusion surface formed between extruding head 2 and shaping mold 1. The wedge-shaped extrusion cavity 3 having a large end comprises a material inlet 31 (as shown in FIG. 1), a shaping mold cavity 12 in shaping mold 1, and further comprises at least a molding segment 121 and an expanding segment 122 expanding from the inlet end toward the outlet end. The diameter of the outlet secured onto the expanding segment 122 is larger than the diameter of the molding segment 121. The outlet of mold cavity 12 is provided to the guided contracting segment 123 whose inlet area is larger than the inlet area of molding segment 121. The guided contracting segment 123 is mounted on one side of the molding cavity through which material is fed. The relative motion produced between the rolling surface of extruding head 2 and the extrusion surface of the shaping mold 1 causes grainy material to be ground, rubbed and drawn into a sheet form. At the same time, the material is intruded into the shallow end of guided contracting segment 123 from the large end secured onto the wedge-shaped extrusion cavity 3. After the material is compressed inside guided contracting segment 123, it is fed into molding segment 121 in mold cavity 12 from the deep end of guided contracting segment 123 and eventually molded.

Extruding head 2 provided with the molding machine of the present invention is driven by power, wherein relative motion is produced between the extrusion surface secured onto extruding head 2 and shaping mold 1. The material is first bored in extrusion cavity 3 by cutting before it is fed into shaping mold cavity 12. Further, application of such cutting force causes grainy material inside extrusion cavity 3 to be first ground, rubbed and extended into a sheet form. As the cubage of extrusion cavity 3 is gradually reduced due to a cutting force, the material [particles] inside extrusion cavity 3 abrades with each other, and simultaneously intruded into shallow end 123a of guided contracting segment 123. After the material is compressed inside guided contracting segment 123, it is fed into molding segment 121 of mold cavity 12 from the deep end 123b of guided contracting segment 123. The sheet-shaped material enters inside shaping mold cavity 12 like a cascade. The layer-to-layer density does not increase gradually through a further extrusion, and at the same time, a part of granules after deformation is incorporated into the interspaces between sheet-shaped granules under positive extrusion pressure applied to the sheet-shaped granules, thereby creating a condition in which granules are interlocked with each other vertically and the special structural model that characterizes the molded articles of the present invention can provide a mechanical strength that is better than that of conventional molded articles.

As shown in FIG. 1, in this embodiment, shaping mold cavity12 of shaping mold 1 comprises a molding segment 121 and an expanding segment 122 expanding from the inlet end to the outlet end. The diameter of an outlet secured to the expanding segment 122 is larger than the diameter of molding segment 121. In this way, when material is molded through shaping mold cavity 12, it is first molded through molding segment 121 and is then extruded through the expanding segment 122. The material inside the expanding segment 122 is exposed to much smaller friction or is molded free of friction because the diameter of the outlet end of the expanding segment 122 is larger than the diameter of molding segment 121. For this reason, the thickness and bonding strength provided to the shaping mold 1 deteriorates little and the length of molding segment 121 shaping mold cavity 12 is reduced. The relatively small conduction distance, which is an advantage of the biological matter based material in a loose condition, can be used for the shaping mold cavity to ensure the quality of molding. The molding segment reduces the length and the time the material is exposed to friction generated by extrusion while the materials remain in the mold cavity. Resistance from the material during extrusion is also substantially reduced. Only a small positive pressure is required for extruding and molding the material. Hence, energy consumption consumed by the material passing through a shaping mold cavity is substantially reduced, further reducing processing costs of the molded articles made of the biological matter-based material of the present invention.

The present invention is a normal temperature extrusion molding [process], that is, molding is not conducted by heating at a high temperature. Therefore, the present invention is able to substantially save energy consumption required for high temperature heating. Most importantly, in the present invention, the biological matter-based material is usable at the time of molding in which the biological matter-based material only is utilized by way of extruding the material under pressure with cutting-induced friction interacting between granules. Elements in the limited position are hence extended and the original lignin is extruded, allowing the use of bonding strength to mold adjacent fibers. Accordingly, the use of the molded product of the present invention ensures higher plasticity and higher moisture resistance.

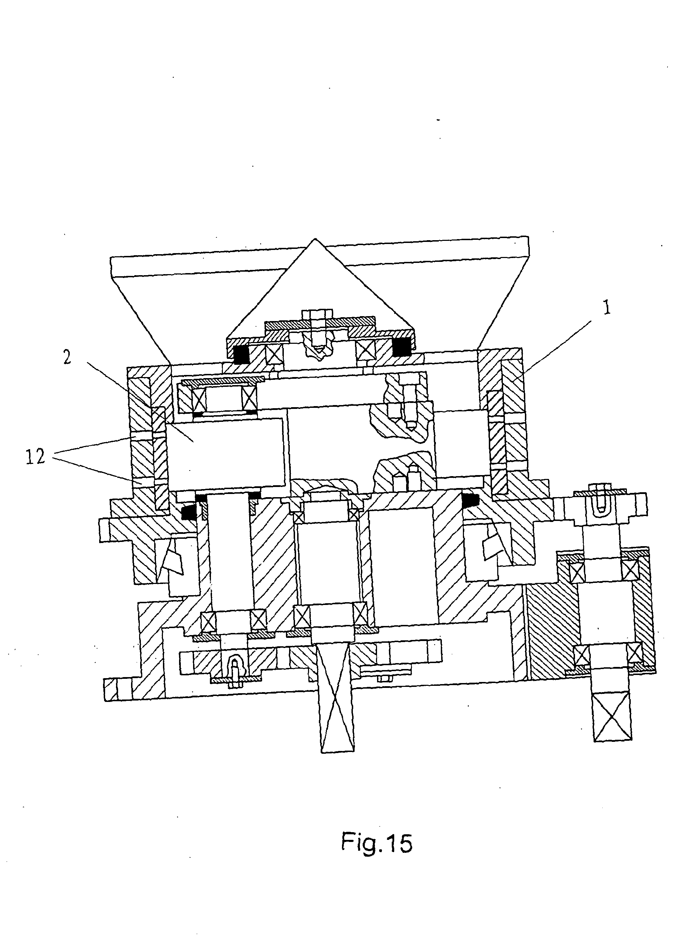

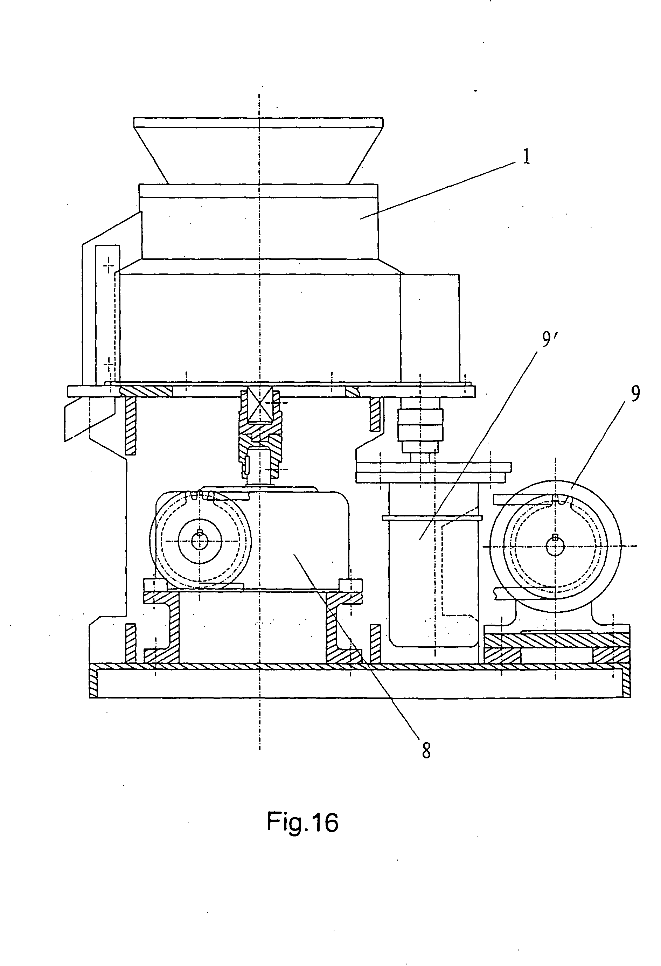

As shown in FIG. 15 and FIG. 16, in this embodiment, extruding head 2 and the shaping mold 1 are driven and rotated by power. The drive power comprises electromotor 9 and decelerated apparatus 8 connected to electromotor 9. Relative motion produced in the extrusion mold 1 which is arranged opposite to extruding head 2 comprises the rotary motion of extruding head 2 about the rotational center and another rotary motion of shaping mold 1 about the rotational axis.

Extruding head 2 may have a roller. The shaping mold may be canister-shaped while the shaping mold cavity may be mounted on one side of the canister-shaped mold. However, the shaping mold cavity 12 may be mounted at an angle with respect to the extrusion surface of the shaping mold.

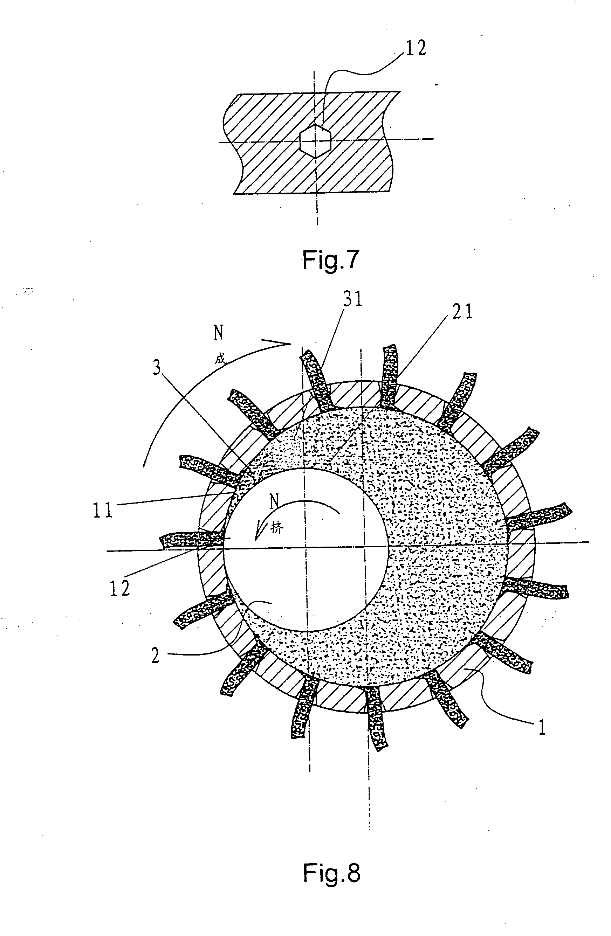

As shown in FIG. 8, in this embodiment, extruding head 2 composed of one roller may be a cylinder, wherein the extruding head 2 driven by power is rotated about the rotational center and wherein the circle surface comprises rolling surface 21. Shaping mold 1 corresponds to the cylindrical shape wherein its internal surface comprises a circular extrusion surface 11 and the curvature of the extrusion surface 11 is larger than the curvature of the rolling surface 21 of the extruding head 2. The rolling surface 21 of extruding head 2 is arranged opposite to the extrusion surface 11 of shaping mold 1, that is, a wedge-shaped extrusion cavity 3 is formed by two curved surfaces located between the rolling surface 21 of extruding head 2 and the extrusion surface 11 of shaping mold 1.

More importantly, as shown in FIG. 1, in this embodiment, expanding segment 122 of shaping mold cavity 12 may be a pole-shaped expanding segment. In this case, the diameter of molding segment 121 from inlet end 12a to outlet end 12b may be smaller than the diameter of expanding segment 122 secured onto the ladder-shaped mold cavity 12.

In the embodiment shown in FIG. 2 to FIG. 4, expanding segment 122 may still be a cone-shaped expanding segment or arc-shaped and expanding segment may have a gradually expanding configuration. The cone-shaped and expanding segments in a gradually expanding configuration may have one (as shown in FIG. 2) or more segments (as shown in FIG. 3). The one or more cone-shaped and expanding segments in the gradually-expanded configuration having an angle widening from inlet end 12a toward outlet end 12b. With the shaping mold cavity 12 having the gradually expanding configuration, resistance from the material during extrusion is reduced. Therefore, only a smaller positive pressure is required for extruding and molding. Hence, the energy consumption and the cost of molding are substantially reduced.

Further, in the embodiment shown in FIG. 1 to FIG 4, the inlet end of the shaping mold cavity 12 is mounted with guided contracting segment 123 whose inlet area is larger than the inlet area of molding segment 121, wherein material is fed into molding segment 121 secured onto shaping mold cavity 12 through the guided contracting segment 123. In this way, the material is ground, rubbed and extruded inside wedge-shaped extrusion cavity 3. It is easy to understand that the material can be fed into guide contracting segment 123 easily because the guided contracting segment 123 has much larger inlet area. The material being compressed and extruded inside guided contracting segment 123 is then molded through the molding segment 121. The extrusion efficiency and the molding quality of extruded articles are further enhanced.

As shown in FIG. 5 to FIG. 7, in the present invention, the cross-sectional view of the shaping mold cavity 12 may produce articles in a variety of cross-sectional shapes in order to meet real requirements of the market. For example, if the cross-section of the shaping mold cavity 12 is in a circular shape, the material may be molded into a circular stick. If the cross-section is in a diamond shape, the material can be molded through the cavity with the diamond cross-section to produce a cylindrical article [having a diamond-shaped cross section]. Alternately, if the cross section is in a hexagonal shape, the material can be molded through the cavity with a hexagonal cross-section to produce a cylindrical article with a hexagonal cross section. The cross-sections can be modified to produce more varieties such as H-shape, rectangle and irregular shapes, to name just a few.

### Third Embodiment

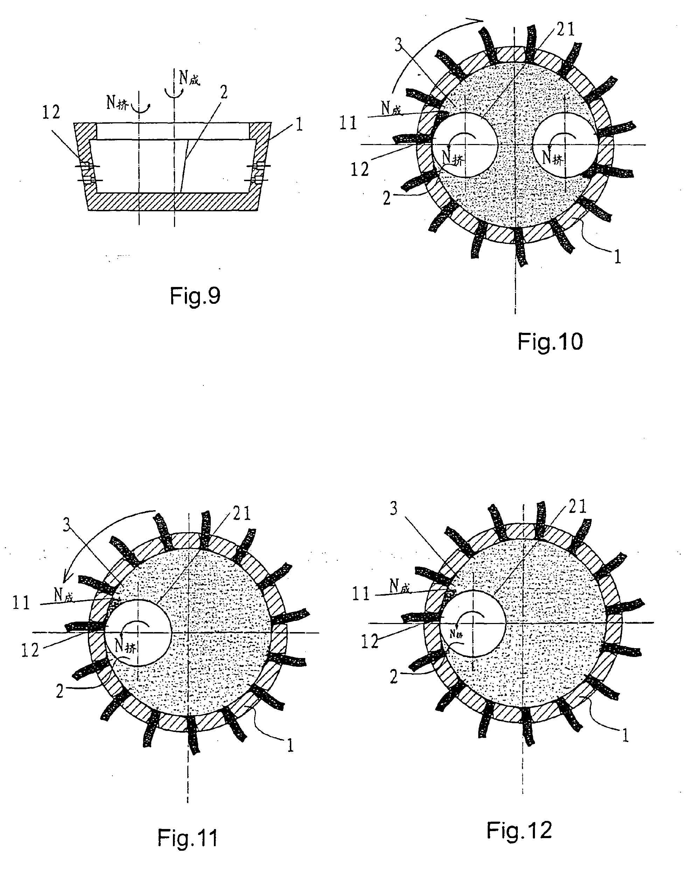

The molding principles and the mechanism described in the present embodiment basically remain the same as the Second Embodiment, wherein the difference is, as shown in FIG. 9, that extruding head 2 may be a cone. The extruding head 2 driven by power is rotated about the rotational center thereof, wherein the conical circumferential surface comprises a rolling surface 21. Shaping mold 1 may be in a conical or cylinder-related shape, where its internal surface comprises conical extrusion surface 11, where the curvature of extrusion surface 11 is larger than the curvature of the rolling surface 21 of extruding head 2. The rolling surface 21 of extruding head 2 is arranged opposite to the extrusion surface 11 of shaping mold 1, that is, a wedge-shaped extrusion cavity 3 is formed by two curved surfaces located between the rolling surface 21 of extruding head 2 and the extrusion surface 11 of the shaping mold.

The effect of the present embodiment is the same as the first embodiment. Naturally, the inventor does not provide the information regarding the experimental conditions and effects of the embodiment.

### Fourth Embodiment

The molding principles and the mechanism described in the present embodiment basically remain the same as the second embodiment, wherein the differences are, as shown in FIG. 10, in this embodiment, two or more extruding head 2 may be mounted in such a manner that each extruding head 2 is driven by power to be rotated about the vertical axes. Two or more wedge-shaped extrusion cavities 3 are formed on the rolling surface 21 of a plurality of extruding heads 2 which are arranged opposite to the extrusion surface 11 of shaping mold 1.

The use of a plurality of extruding heads during extrusion and molding not only improves productivity of the molding machine, but also reduces manufacturing costs.

The method and the effect of motion of the present embodiment are the same as the first embodiment. Naturally, the inventor does not provide the information regarding the experimental conditions and effects of the embodiment.

### Fifth Embodiment

The molding principles and the mechanism of the present embodiment basically remain the same as the second embodiment, wherein the differences are, as shown in FIG. 11 and FIG. 12, that the driving power comprises an electromotor which is connected to at least two decelerated apparatuses whose fan-outs are connected to extruding head 2 and shaping mold 1 separately, wherein relative motion at different speeds are generated between the extrusion surface 11 coupled to extruding head 2 and the shaping mold 1. As shown in FIG.11, the relative motion between the extruding head 2 and the shaping mold 1 may be a rotational motion at different speeds in the same direction. However, in the case of rotation in the same direction, the N extruding [amount] does not equal to the N molding [amount]. Consequently, relative motion at different speeds is generated between the extrusion surface 11 secured onto shaping mold 1 and the extruding head 2 thereof. The most desirable molding effect will be obtained when the N extruding [amount] is larger than the N molding [amount]. As shown in FIG.12 in detail, relative motion generated between extruding head 2 and shaping mold 1 may also be the rotary motion at different speeds in the opposite direction.

In the present embodiment, as shown in FIG. 15 and FIG. 16, extruding head 2 and shaping mold 1 may also be rotated by different drive powers separately, fan-outs secured onto said at least two decelerated apparatuses are connected to extruding head 2 and shaping mold 1 respectively, as shown in FIG. 16, extruding head 2 is rotated by electromotor 9 via drive reducer 8, while shaping mold 1 is rotated by operating the electromotor 9. As a result, relative motion at different speeds is generated on the extrusion surface11 between extruding head 2 and shaping mold 1.

### Sixth Embodiment

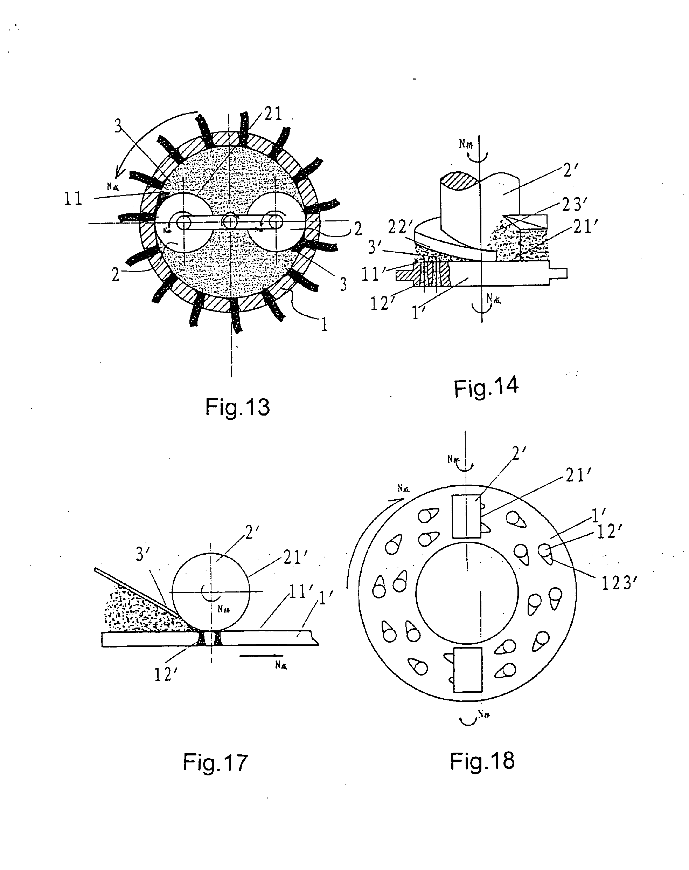

The molding principles and the mechanism described in the present embodiment basically remains the same as the fifth embodiment, wherein the difference is, as shown in FIG. 13, that two or more extruding heads 2 may be mounted thereon wherein each of the extruding heads is driven by the same power, and two or more wedge-shaped extrusion cavities 3 may be formed on the rolling surface 21 secured onto a plurality of extruding heads 2 which are arranged opposite to the extrusion surface 11 of shaping mold 1.

In this embodiment, the relative motion generated in extrusion mold 1 which is arranged opposite to the extruding head may comprise rotary motion of extruding head 2 about the rotational axis and the revolution of the extruding head 2 around the rotational center coupled to shaping mold 1.

The rotation of extruding head 2 about the rotational axis and the revolution of extruding head 2 around the rotational center thereof coupled to shaping mold 1 may be in the same direction at different speeds or opposite directions at different speeds. The linear velocity of the rotation of extruding head 2 about the rotational axis is larger than the linear velocity of the revolution of extruding head 2 which arranged is opposite to shaping mold 1.

### Seventh Embodiment

The molding principles and the mechanism described in the present embodiment basically remains the same as the fifth embodiment, wherein the difference is, as shown in FIG. 14, the extruding head 2'may comprise a rotor, and extruding head 2' may be a pole-shaped member. Extruding head 2'has extrusion surface 21' having at least one circular slope surface 22'. Shaping mold 1 may be flat. The shaping mold 1 has extrusion surface 11', and shaping mold cavity 12' is disposed along the flat shaping mold 1'. A wedge-shaped extrusion cavity is formed between the extrusion surface 21' of the extruding head 2' and the extrusion surface 11'of shaping mold 1'. At the high end secured onto slope surface 22'of the extruding head 2', there is a radial opening for material inlet 23'. Material is fed into the wedge-shaped extrusion cavity 3' through the said material inlet 23'and is extruded and processed.

The extrusion cavity 3'is formed along the extruding head 2' in a widening manner in the same direction in which it moves. When extruding head 2' relatively rotates on the extrusion surface 11' of the shaping mold 1', material entering inside the extrusion cavity 3' is bored using a cutting force during the motion of the extruding head 2'. In the presence of such a cutting force, the material is ground, rubbed, drawn and extended into a sheet form. In addition, in the presence of such a cutting force, the material [particles] inside extrusion cavity 3' abrade each other, at the same time, as the extruding head 2' moves, the material is directed to the small end of wedge-shaped extrusion cavity 3' and is intruded into the shaping mold cavity 12' inside the shaping mold 1'.

The extruding head 2' of the present embodiment may be a cylindrical member. The end surface of the extruding head 2' may be formed by the extrusion surface 21' of the extruding head 2'. Shaping mold 1' may be formed in a disk shape and the axis of extruding head 2' and the axis of shaping mold 1.' may be parallel to each other or overlapped. Shaping mold 1' has a circular extrusion end surface 11'. The extrusion end surface 11' is arranged opposite to shaping mold cavity 12' at an angle. Shaping mold cavity 12' is provided on the shaping mold 1' along extrusion surface 11', consequently molding the material into a plurality of stick-like burning material at a time. In the presence of the cutting force, the material inside extrusion cavity 3' is constantly fed into shaping mold cavity 12' and is molded into a stick member. As the extrusion operation progresses, the biological matter-based material is fed into shaping mold cavity 12'. The biological matter-based material is first fed into shaping mold cavity 12' and continuously compressed so as to increase its density constantly, at the same time, when the sheet-shaped granules that are present in the biological matter-based material are ground and rubbed inside extrusion cavity 3' the granules are deformed in part and incorporated into the interspaces between sheet-shaped granules, thereby creating the condition in which granules are interlocked with each other vertically. Accordingly, the special structural model which characterizes the dynamic properties [sic, mechanical strength] of the molded articles of the present invention that is better than that of conventional molded articles is thus provided. Finally, the molded burning material is extruded from the outlet end of shaping mold cavity 12'.

The extruding head 2' in this embodiment may be driven by the same power generating rotations about the vertical axes of the center rotary shaft, whereas the shaping mold 1' may be designed to be a stationary component. The end surface 21' coupled to the slope surface 22' is arranged opposite to extrusion surface 11' and produces relative gliding motion on the plane defined by the shaping mold 1' and the extrusion surface 11', providing a method of generating a smooth relative motion thereon. This constitutes the differential speed relative motion generated by extruding head 2' and the extruding surface 11' secured onto shaping mold 1'. The grainy biological matter-based material is pinched therebetween to be ground and drawn into a sheet form during the extrusion in the smooth motion derived from the differential speed motion processing. As the biological matter-based material is ground and drawn at the same time, the direction of the motion forces the material to be extruded more toward the small end of wedge-shaped extrusion cavity 3'. Finally, biological matter-based material is extruded inside the shaping mold cavity 12' of the shaping mold 1' and molded.

In this embodiment, the moving method in which the previously described extruding head is arranged opposite to the shaping mold is moved relative to the shaping mold. In this method, that is, both the extruding head and the shaping mold may be rotated by the same drive force, wherein the rotational may be in the same direction, which is from the small end to the large end, but the rotation speeds are different, consequently demonstrating the differential speed relative motion method. A more advantageous effect can be expected if the N extrusion [amount] is greater than the N molding amount. The rotational direction of the shaping mold may be reversed to rotate the shaping mold in a direction opposite to that of the extruding head. In the relative motion method, both sides can be rotated either at the same speed or at different speeds.

Other effects of the present embodiment remain the same as the first embodiment. Naturally, therefore, the inventor does not describe them again.

### Eighth Embodiment

The molding principles and the mechanism described in the present embodiment basically remain the same as the seventh embodiment, wherein the differences are, as shown in FIG. 17, that the shaping mold 1'may be a plank-shaped mold with the characteristic of the reciprocating motion or one-way motion and its extruding head 2' is in a cylindrical shape wherein the outer surface of the cylinder constitutes the extrusion surface 21' of the extruding head 2'.

As shown in FIG. 17, material fed into extrusion cavity 3' is bored by a cutting force during rotation of extruding head 2'. In the presence of such a cutting force, the material is ground and drawn into a sheet form. In the presence of the cutting force, the material [particles] inside extrusion cavity 3' abrade with each other, at the same time, the motion of the extruding head 2' feeds the material into the small end of wedge-shaped extrusion cavity 3' intruding the material into the shaping mold cavity 12' in the shaping mold 1'. In this embodiment, extruding head 2' rotates about the axes while moving along the shaping mold 1', whereas shaping mold 1' remains stationary. The material pressed by the motion of the extruding head 2' is intruded into extrusion cavity 3'. Also, extruding head 2' only rotates about the rotational axes. Shaping mold 1' moves in a reciprocal fashion or one-way, allowing the material to be intruded into extrusion cavity 3'.
In the embodiment, as shown in FIG. 18, the shaping mold 1' may be shaped in a circular plank-shape that can be rotated about the axes. Extruding head 2' is mounted on the circular panel and the Extruding head 2' is in cylinder-shaped form, wherein the outer surface of the cylinder constitutes the extrusion surface 21' of the extruding head 2', and the axis of the extruding head 2' and the axis of the shaping mold 1' intersect each other.

Further, there may be two extruding heads 2'. However, the rotational direction of each of the extruding heads must be opposite each other such that the material can be fed into the shaping mold cavity 12' through guided contracting segment 123' secured onto the same side of the shaping mold cavity 12'.

Two or more extruding heads may be used in this embodiment. Hence, increasing the number of extruding heads may improve productivity of the molding machine.

Other effects of the present embodiment basically remain the same as the first embodiment. Accordingly, the inventor does not repeat the information.

## Claims

1. An extrusion molding cavity for molding a shapeable material made of a biological matter in a loose condition wherein said molding cavity is located on the surface of a shaping mold; a material inlet of said mold cavity is arranged opposite to an extruding head; a molding segment and an expanding-segment are provided along said molding cavity from inlet end to the outlet end respectively; the diameter of the outlet of said expanding segment is larger than the diameter of the molding segment; the inlet end of said mold cavity is mounted with a guided contracting segment; the inlet area of said guided contracting segment is larger than the inlet area of said molding segment; the guided contracting segment being mounted on one side of a shaping mold cavity, wherein material is intruded into the shallow end of said guided contracting segment via one side of said shaping mold cavity and wherein after material is compressed inside said guided contracting segment, the material enters the molding segment thereof from the deep end and eventually is molded.

2. The extrusion shaping mold cavity for molding a shapeable material made of a biological matter in a loose condition as set forth in Claim 1 wherein said expanding segment is a pole-like expanding segment or an expanding segment which expands gradually.

3. The extrusion shaping mold cavity for molding a shapeable material made of a biological matter in a loose condition as set forth in Claim 2 wherein said expanding segment which expands gradually is a cone-shaped expanding segment or an arc expanding segment which expands gradually.

4. The extrusion shaping mold cavity for molding a shapeable material made of a biological matter in a loose condition as set forth in Claim 3 wherein said cone-shaped expanding segment may be a single or multiple segment; the angle of expansion of said one or more cone-shaped segments increasing gradually from the inlet end toward the outlet end.

5. An extrusion shaping mold cavity for molding a shapeable material made of a biological matter in a loose condition as in any one of Claims 1- 4 wherein the cross section of said expanding segment might be a circle, a diamond, a hexagon or an irregular shape.

6. The extrusion shaping mold cavity for molding a shapeable material made of a biological matter in a loose condition as set forth in Claim 1 wherein the height of the large end of said guided contracting segment is shorter than the force conduction distance of said material, typically no greater than 10 mm.

7. A molding machine for molding a shapeable material made of a biological matter in a loose condition includes at least one extruding head driven by power and one shaping mold; the extrusion surface between said extruding head and a shaping mold has at least one wedge-shape extrusion cavity, where the large end of the wedge-shaped extrusion cavity provided to a material inlet; said shaping mold cavity of said shaping mold comprises at least an expanding segment and a molding segment provided along the axis from inlet end to the outlet end thereof; the diameter of the outlet end of said expanding segment is at least larger than the diameter of the molding segment; the inlet of said mold cavity is mounted with a guided contracting segment; the inlet area of said guided contracting segment is larger than the inlet area of said molding segment; said guided contracting segment being mounted on one side of a shaping mold cavity under the influence of the relative motion of the extrusion surface between an extruding head and a shaping mold whereby a grainy material is ground, rubbed, pulled, extended into a sheet form and intruded into the shallow end of said guided contracting segment from the large end of the wedge-shaped extrusion mold cavity; after the material is compressed inside said guided contracting segment and enters into the molding segment of said mold cavity from the deep end of the guided contracting segment.

8. The molding machine for molding a shapeable material made of a biological matter in a loose condition as in Claim 7 wherein said extruding head may comprise a roller, said shaping mold having a canister-shape, and said shaping mold cavity being mounted on the side wall of said canister-shaped mold; said wedge extrusion mold cavity being formed between the rolling surface of said extruding head and the extrusion surface of said shaping mold.

9. The molding machine for molding a shapeable material made of a biological matter in a loose condition as set forth in Claim 8 wherein said extruding head constructed with a roller may be cylindrically shaped and said shaping mold may correspond to said cylindrical shape.

10. The molding machine for molding a shapeable material made of a biological matter in a loose condition as set forth in Claim 8 wherein said extruding head constructed with a roller may be conically shaped and said shaping mold may correspond to said conical shape.

11. The molding machine for molding a shapeable material made of a biological matter in a loose condition as set forth in Claim 7 wherein said extruding head may be constructed with a rotor; said shaping mold may be flat; said shaping mold cavity may be located on said flat mold; said wedge-shaped extrusion cavity may be formed on the extrusion surface between said extruding head and said shaping mold.

12. The molding machine for molding a shapeable material made of a biological matter in a loose condition as set forth in claim 11 wherein said shaping mold may be disk shaped; the axis of said extruding head and the axis of said shaping mold may be in parallel with each other or may be overlapped; and the end surface of said extruding head constitutes the extrusion surface of said extruding head.

13. The molding machine for molding a shapeable material made of a biological matter in a loose condition as set forth in Claim 11 wherein said shaping mold may be molded into a plank-shape with the reciprocal motion or one directional motion characteristic; its extruding head may be cylindrically shaped and the surface of said cylindrical shape constitutes the extrusion surface of said extruding head.

14. The molding machine for molding a shapeable material made of a biological matter in a loose condition as set forth in Claim 11 wherein said shaping mold may be molded into a circular plate shape that can be rotated about the axis thereof; a circular panel being mounted on said extruding head; said extruding head is formed in a cylindrical shape; the outer surface of said cylinder constituting the extrusion surface of said extruding head; the axis of said extruding head and the axis of said shaping mold intersecting each other.

15. The molding machine for molding a shapeable material made of a biological matter in a loose condition as set forth in any one of Claims 7-11 wherein said expanding segment may be a pole-shaped expanding segment or an expanding segment which expands gradually.

16. The molding machine for molding a shapeable material made of a biological matter in a loose condition as set forth in Claim 15 wherein said expanding segment which expands gradually may be a cone- shaped expanding segment or an arc-shaped expanding segment which expands gradually.

17. The molding machine for molding a shapeable material made of a biological matter in a loose condition as set forth in Claim 11 wherein said cone-shaped expanding segment may have one or more segments; the gradually expanding angle of one or more cone-shaped expanding segments increasing from the inlet end toward the outlet end.

18. The molding machine for molding a shapeable material made of a biological matter in a loose condition as set forth in any one of Claims 7-11 wherein said extruding head and said shaping mold are both rotated by a drive force; said drive force comprises an electric device and a deceleration apparatus connected to said electric device; the relative motions occurring in said extrusion mold turning in the opposite direction to said extruding head comprise said extruding head's rotation about the rotation center and said shaping mold's rotation about the rotational axis thereof.

19. The molding machine for molding a shapeable material made of a biological matter in a loose condition as set forth in Claim 18 wherein said extruding head and said shaping mold are rotated separately by a drive force; fan-outs secured to at least two of said decelerated apparatuses are connected to said extruding head and said shaping mold separately; the differential speed relative motions coupled to said extruding head and said shaping mold are generated on the extrusion surface.

20. The molding machine for molding a shapeable material made of a biological matter in a loose condition as set forth in Claim 18 wherein said driving force comprises an electric device which is connected to at least two said decelerated apparatuses having at least fan-outs which are connected to said extruding head and said shaping mold separately; wherein the differential speed relative motions coupled to said extruding head and said shaping mold are generated on the extrusion surface.

21. The molding machine for molding a shapeable material made of a biological matter in a loose condition as set forth in Claims 19 or 20 wherein the relative motions between said extruding head and said shaping mold may be the differential speed rotations in the same direction.

22. The molding machine for molding a shapeable material made of a biological matter in a loose condition as set forth in Claims 19 or 20 wherein the relative motion between said extruding head and said shaping mold may be rotations in the opposite direction.

23. The molding machine for molding a shapeable material made of a biological matter in a loose condition as set forth in Claims 19 or claim 20 wherein the most preferable linear velocity of said extruding head is greater than the linear velocity of the extrusion surface of said shaping mold.

24. The molding machine for molding a shapeable material made of a biological matter in a loose condition as in any one of Claims 7-11, wherein said extruding head may be a single segment; wherein a wedge-shaped extrusion cavity is formed on the extrusion surface between said extruding head and said shaping mold.

25. The molding machine for molding a shapeable material made of a biological matter in a loose condition as set forth in any one of Claims 7-11, wherein said molding machine comprises two or more extruding heads; said two or more extruding heads are rotated at the same speed in the same direction; two or more wedge-shaped extrusion cavities may be formed at the corresponding points on the extrusion surface between said extruding head and said shaping mold.

26. The molding machine for molding a shapeable material made of a biological matter in a loose condition as set forth in Claim 25 wherein said two or more extruding heads may be driven by the same power [source].

27. The molding machine for molding a shapeable material made of a biological matter in a loose condition as set forth in Claim 25 wherein said relative motions generated by said extrusion mold which is arranged opposite to said extruding head comprise said extruding head's rotation about the rotation axis thereof and said extruding head's revolution around said shaping mold's rotational center coupled to said shaping mold.

28. The molding machine for molding a shapeable material made of a biological matter in a loose condition as set forth in any one of Claim 7-11 wherein said shaping mold cavity on a shaping mold may be provided at an angle with respect to the extrusion surface of said shaping mold.
